(19) Europäisches Patentamt
European Patent Office
Office européen des brevets

(11) **EP 1 002 971 B1**

(12) **EUROPÄISCHE PATENTSCHRIFT**

(45) Veröffentlichungstag und Bekanntmachung des Hinweises auf die Patenterteilung:
**21.01.2004 Patentblatt 2004/04**

(51) Int Cl.⁷: **F16H 61/04**, F16H 3/12

(21) Anmeldenummer: **99119520.7**

(22) Anmeldetag: **01.10.1999**

(54) **Kraftfahrzeug-Antriebsstrang und Verfahren zum Steuern eines Schaltvorganges eines Kraftfahrzeug-Antriebsstranges**

Vehicle drive train and method for controlling the shifting of the drive train

Transmission pour véhicule automobile et procédé pour commander le changement de vitesse

(84) Benannte Vertragsstaaten:
**ES FR GB IT**

(30) Priorität: **21.11.1998 DE 19853825**

(43) Veröffentlichungstag der Anmeldung:
**24.05.2000 Patentblatt 2000/21**

(73) Patentinhaber: **GETRAG Getriebe- und Zahnradfabrik Hermann Hagenmeyer GmbH & Cie KG 74199 Untergruppenbach (DE)**

(72) Erfinder:
• **Seufert, Martin**
  **71229 Leonberg (DE)**

• **Knödel, Gunter**
  **75417 Mühlacker (DE)**

(74) Vertreter: **Steil, Christian, Dipl.-Ing. et al Witte, Weller & Partner, Postfach 10 54 62 70047 Stuttgart (DE)**

(56) Entgegenhaltungen:
**DE-A- 3 812 327      DE-A- 3 812 359
DE-A- 4 031 851      DE-A- 4 236 515
DE-A- 4 401 812      DE-C- 19 548 622**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft einen automatisierbaren Kraftfahrzeug-Antriebsstrang mit einem Stufengetriebe und einer Trennkupplung, die zwischen Motor des Kraftfahrzeuges und Stufengetriebe geschaltet ist, wobei das Stufengetriebe eine Mehrzahl von Radsätzen entsprechend N Vorwärtsgangen und wenigstens einem Rückwärtsgang aufweist, wobei erste Losräder einer ersten Anzahl der Radsätze mittels Schaltkupplungen unter Einrichtung jeweiliger erster Kraftübertragungszweige mit einer sie tragenden Welle drehfest verbindbar sind, während eine zweite Anzahl der Radsätze mittels wenigstens einer Reibungskupplung zur Einrichtung jeweiliger zweiter Kraftübertragungszweige geeignet ist, und wobei im Verlauf von Gangwechseln, bei denen wenigstens eine Schaltkupplung zum Trennen bzw. Einrichten eines ersten Kraftübertragungszweiges betätigt wird, die Reibungskupplung zusätzlich betätigbar ist, um einen Schaltruck zu vermindern.

Die Erfindung betrifft ferner ein Verfahren zum Steuern eines Schaltvorganges eines N-Gang-Stufengetriebes eines automatisierbaren Kraftfahrzeug-Antriebsstranges, mit den Schritten, im Zugbetrieb unter Last

a) einen eingelegten Gang des Stufengetriebes auszulegen, um einen bisherigen ersten Kraftübertragungszweig aufzutrennen,

b) einen einzulegenden Gang des Stufengetriebes einzulegen, um einen neuen ersten Kraftübertragungszweig einzurichten, und

c) im Verlauf der Schritte a) und b) Drehmoment von einem Kraftfahrzeugmotor mittels wenigstens einer Reibungskupplung über einen zweiten Kraftübertragungszweig auf eine Abtriebswelle des Stufengetriebes zu übertragen, wobei die Reibungskupplung einem Gang mit einem niedrigeren Übersetzungsverhältnis zugeordnet ist als der aus- und der einzulegende Gang.

Ein solcher Kraftfahrzeug-Antriebsstrang und ein solches Verfahren zum Steuern eines Schaltvorganges eines N-Gang-Stufengetriebes eines Kraftfahrzeug-Antriebsstranges sind aus der DE 44 01 812 A1 bekannt.

Bei Kraftfahrzeuggetrieben unterscheidet man zwischen sogenannten Lastschaltgetrieben einerseits und Getrieben mit Zugkraftunterbrechung andererseits. Lastschaltgetriebe sind üblicherweise als Planetengetriebe mit vorgeschaltetem hydrodynamischem Wandler ausgebildet. Durch Betätigen von Kupplungen und Bremsen für die einzelnen Elemente des Planetengetriebs werden die Gänge in zeitlicher Überschneidung geschaltet, so daß während eines Gangwechsels keine Unterbrechung der Zugkraft vom Motor zu den Rädern des Kraftfahrzeuges auftritt.

Bei Getrieben mit Zugkraftunterbrechung, beispielsweise herkömmlichen Kraftfahrzeug-Stufengetrieben in Vorgelegebauweise, wird hingegen der Kraftfluß bei jedem Gangwechsel zunächst im alten Gang aufgetrennt und dann im neuen Gang wieder geschlossen, so daß während des Gangwechsels eine Unterbrechung der Zugkraft eintritt. Diese Unterbrechung macht sich im Zugbetrieb als Schaltruck bemerkbar, der insbesondere beim Hochschalten von niedrigeren in höhere Gänge störend sein kann, wenn das Fahrzeug infolge der Zugkraft-Unterbrechung "nickt".

Im Rahmen der Automatisierung von solchen Stufengetrieben mit Zugkraftunterbrechung hat man versucht, den Schaltruck dadurch zu vermindern, daß man zwei parallele Trennkupplungen vorsieht, die mit einer ersten bzw. einer zweiten Gruppe von Gängen verbindbar sind. Bei solchen, üblicherweise als Doppelkupplungsgetriebe bezeichneten Getrieben können Gangwechsel im Zugbetrieb ohne jede Zugkraftunterbrechung durchgeführt werden, da in zeitlicher Überschneidung ein Gang einer ersten Gruppe mittels beispielsweise einer der beiden Trennkupplungen ausgelegt und gleichzeitig mittels der zweiten Trennkupplung ein anderer Gang aus der zweiten Gruppe eingelegt wird.

Doppelkupplungsgetriebe verlangen aufgrund der Parallelität ihrer Konstruktion, daß die mit einer der beiden Kupplungen verbundene Welle als Hohlwelle ausgebildet ist. Solche Hohlwellen konstruktionen sind vergleichsweise teuer. Zudem bauen solche Doppelkupplungsgetriebe relativ groß, insbesondere aufgrund der zwei parallelen Trennkupplungen, auch wenn diese baulich aufgrund der Hohlwellen zusammengefaßt werden können, wie es beispielsweise in der DE 38 12 359 A1 beschrieben ist.

Das aus der eingangs erwähnten DE 44 01 812 A1 bekannte Stufengetriebe weist ebenfalls eingangsseitig zwei baulich vereinigte Reibungskupplungen auf. Die eine der zwei Reibungskupplungen ist mit einer an sich herkömmlichen Getriebeeingangswelle eines ebenfalls im wesentlichen herkömmlichen Stufengetriebes in Vorgelegebauweise verbunden. Die andere Trennkupplung ist über einen kurzen Hohlwellenabschnitt mit einem auf der Getriebeeingangswelle gelagerten Losrad für den höchsten Gang verbunden.

Der höchste, bei dem vorgeschlagenen Getriebe der sechste Getriebegang ist somit als zuschaltbare Getriebestufe ausgeführt, um Gangwechsel mit vermindertem Schaltruck durchführen zu können. Es handelt sich bei diesem Getriebe also nicht um ein Doppelkupplungsgetriebe im oben beschriebenen Sinne, obgleich auch hier zwei Kupplungen baulich in einer kompakten Bauweise zusammengefaßt sind. Im Unterschied zu "echten" Doppelkupplungsgetrieben wird bei Gangwechseln 1-2, 2-3, 3-4, 4-5 im Zeitraum der Zugkraftunterbrechung über die zweite Kupplung der sechste Gang auf die Abtriebswelle des Getriebes geschaltet. Dies ist möglich, weil der sechste Gang das niedrigste Übersetzungsverhältnis besitzt. Denn beim Hochschalten beispielsweise von 2 nach 3 muß - bei annähernd konstanter Drehzahl der Getriebeabtriebswelle - die Getriebeeingangswelle nach dem Auslegen des zweiten Ganges und vor dem Einlegen des dritten Ganges abgebremst werden, um eine Drehzahlanpassung der sich drehenden Elemente zu erreichen. Dies erfolgt bei herkömmlichen Stufengetrieben über in der Regel eine der jeweiligen Schaltkupplung zugeordnete Synchroneinheit. Das Einlegen des sechsten Ganges zur Zugkraftüberbrückung mittels der zweiten Kupplung führt, da sich das Losrad des sechsten Ganges schneller dreht als die Getriebeeingangswelle, nach einem Auslegen des zweiten Ganges zu einem Abbremsen des entsprechenden Rades des dritten Ganges, so daß der Schaltvorgang auch schneller erfolgen kann. Dieses zweite Konzept, den bei herkömmlichen Stufengetrieben mit einer Unterbrechung der Zugkraft einhergehenden Schaltruck zu vermindern, wird vorwiegend unter dem Begriff der Zugkraftüberbrükkung geführt. Denn im Gegensatz zu echten Doppelkupplungsgetrieben wird der Schaltruck häufig nur gemildert, wohingegen er mit einem "echten" Doppelkupplungsgetriebe vollkommen vermieden werden kann.

Ein weiteres Getriebe mit Zugkraftüberbrükkung ist aus der EP 0 173 117 B1 bekannt. Bei diesem Getriebe ist keine Trennkupplung zwischen den Kraftfahrzeugmotor und das Stufengetriebe geschaltet. Zur Zugkraftüberbrückung ist dem höchsten Gang eine fluidisch betätigbare Reibungskupplung zugeordnet. Diese Kupplung muß jedoch außerordentlich groß dimensioniert sein, da Anfahrvorgänge aufgrund der fehlenden Trennkupplung ausschließlich im höchsten (fünften) Gang erfolgen können, bei entsprechend hohen Reibungsverlusten.

Ferner ist aus der DE 40 31 851 A1 ein weiteres Stufenwechselgetriebe mit nur einer einzigen Reibungskupplung bekannt. Bei diesem Getriebe ist eine Motorabtriebswelle ständig starr mit einer Getriebeeingangswelle verbunden, auf der eine Mehrzahl von Rädern von Radsätzen angeordnet sind. Die Reibungskupplung verbindet ein Schwungrad der Motorabtriebswelle mit einer konzentrisch zu der Getriebeeingangswelle vorgesehenen Hohlwelle, an der Festräder von weiteren Radsätzen festgelegt sind. An der Hohlwelle sind neben dem höchsten Gang noch Festräder des ersten Ganges und des Rückwärtsganges angeordnet. Somit ist es bei diesem Getriebe nicht nur möglich, bei Gangwechseln 1-2, 2-3, 3-4 im Zugbetrieb über den höchsten (fünften) Gang ein Drehmoment auf die Abtriebswelle des Getriebes zu übertragen. Im Schubbetrieb kann die ebenfalls an der Hohlwelle angeordnete erste Gangstufe zur Momentenumleitung genutzt werden.

Die Tatsache, daß eine Abtriebswelle des Motors ständig starr mit einer Räder tragenden Getriebeeingangswelle verbunden ist, bringt natürlich ein gewisses Gefahrenpotential mit sich. Andererseits soll bei diesem Getriebe von Vorteil sein, daß nur geringfügige bauliche Änderungen von herkömmlichen Handschaltgetrieben notwendig sind, insbesondere keine zusätzliche Kupplung erforderlich ist. Von Nachteil ist bei diesem Getriebe ferner, daß der erste Gang und der fünfte Gang gemeinsam auf der mit der Kupplung verbundenen Hohlwelle angeordnet sind. Denn hierdurch tritt zu Beginn eines Gangwechsels vom ersten Gang in den zweiten Gang aufgrund des erforderlichen Ausrückens der Kupplung eine kurzfristige Zugkraftunterbrechung auf, die zu einem unerwünschten Hochdrehen des Verbrennungsmotors führen kann.

Schließlich ist aus der DE 195 48 622 C1 ein zugkraftunterbrechungsfrei schaltbares Vorgelege-Wechselgetriebe für Kraftfahrzeuge bekannt. Bei diesem Getriebe handelt es sich um ein Dreifach-Kupplungsgetriebe. Neben einer Reibungskupplung, die zwischen Motorabtriebswelle und Getriebe angeordnet ist, sind eine Klauenkupplung und eine Synchronkupplung vorgesehen.

Der Eingang der Reibungskupplung (also die Motorabtriebswelle) ist über die Klauenkupplung mit einer Getriebeeingangswelle verbindbar. Die als Hohlwelle ausgebildete Abtriebswelle der Reibungskupplung ist über die Synchronkupplung entweder mit der Getriebeeingangswelle oder mit einem Losrad des höchsten Ganges Getriebes verbindbar. Durch diese sehr spezielle Anordnung kann im Gegensatz zu dem Getriebe der DE 40 31 851 A1 vermieden werden, daß eine Zugkraftunterbrechung beim Gangwechsel vom ersten in den zweiten Gang auftritt. Die Konstruktion ist jedoch außerordentlich aufwendig, insbesondere aufgrund der drei unterschiedlichen Kupplungen. Die Tatsache, daß die Motorabtriebswelle über eine Klauenkupplung, die sich unter Last nur schwer öffnen läßt, mit der Getriebeeingangswelle unter bestimmten Betriebszuständen verbunden ist, stellt ebenfalls eine Sicherheitsgefährdung dar, ähnlich wie bei der DE 40 31 851 A1. Der erforderliche Bauraum ist zudem außerordentlich hoch.

Insgesamt läßt sich bei den oben beschriebenen Systemen mit Zugkraftüberbrückung im Gegensatz zu Doppelkupplungsgetrieben ein Schaltruck in der Regel nur vermindern, nicht jedoch vollkommen vermeiden.

Aus dem Dokument DE 42 36 515 A ist ein Kraftfahrzeug-Antriebsstrang gemäß den Oberbegriffen der Ansprüche 1 und 9 bekannt.

Die vor diesem Hintergrund der Erfindung zugrunde liegende Aufgabe besteht somit darin, einen Kraftfahrzeug-Antriebsstrang der eingangs genannten Art bzw. ein zugeordnetes Verfahren dahingehend weiterzubilden, daß bei geringstmöglichem konstruktivem Aufwand möglichst geringe Komforteinbußen aufgrund von Schaltrucken auftreten.

Diese Aufgabe wird bei dem eingangs genannten Kraftfahrzeug-Antriebsstrang erfindungsgemäß dadurch gelöst, daß die Reibungskupplung wenigstens einem der Vorwärtsgänge 3 bis N-1 zugeordnet ist.

Bei dem eingangs genannten Steuerverfahren wird diese Aufgabe erfindungsgemäß ferner dadurch gelöst, daß die Reibungskupplung wenigstens einem der Gänge 3 bis N-1 zugeordnet wird.

Die der Erfindung zugrunde liegende Aufgabe wird auf diese Weise vollkommen gelöst.

Durch den Gedanken, eine Reibungskupplung zur Zuschaltung eines zweiten Kraftübertragungszweigs bei Gangwechseln zur Vermeidung eines Schaltruckes nicht dem höchsten (N-ten) Gang des Getriebes zuzuordnen, sondern wenigstens einem der Gänge 3 bis N-1, wird bei Gangwechseln in den darunter liegenden Gängen eine merklich größere Linderung des Schaltruckes erreicht als bei einer Zugkraftüberbrückung mittels des höchsten Ganges. Denn im höchsten Gang wird das geringste Moment übertragen. Bei einem Schaltwechsel beispielsweise vom ersten in den zweiten Gang fällt das Moment bei einer Zugkraftüberbrückung mit nur dem höchsten Gang relativ stark ab, wohingegen bei einer Zugkraftüberbrückung mittels einem der Gänge 3 bis N-1 jeweils ein größeres Moment auf die Abtriebswelle des Getriebes und somit auf die Räder des Kraftfahrzeugs geleitet werden kann. Die Erfinder haben erkannt, daß der durch die erfindungsgemäße Maßnahme bedingte Nachteil, daß bei einem Gangwechsel oberhalb von dem Gang, dem die Reibungskupplung zugeordnet ist, keinerlei Zugkraftüberbrückung stattfinden kann, in der Praxis keineswegs so gravierend ist. Denn bei einem Gangwechsel von beispielsweise vom fünften in den sechsten Gang ist der zu überbrückende Drehmomentsprung ohnehin vergleichsweise gering, so daß der Fahrer keinen den Komfort wesentlich beeinträchtigenden Schaltruck spürt. Subjektiv wird von einem Führer des Kraftfahrzeugs der Nachteil der fehlenden Zugkraftüberbrückung in den höheren Gängen daher kaum verspürt, der Vorteil der besseren Zugkraftüberbrückung in den unteren Gängen dagegen als enorm empfunden.

Es versteht sich, daß beispielsweise bei einem 5-Ganggetriebe und einer Zuordnung der Reibungskupplung dem 3. Vorwärtsgang eine Zugkraftüberbrückung mit dem vergleichsweise hohen Moment des dritten Ganges bei einem Gangwechsel von 1 nach 2 erreicht werden kann. Ferner kann bei einem Gangwechsel vom zweiten in den dritten Gang ohne jeden Zugkrafteinbruch geschaltet werden, da die Reibungskupplung in diesem Fall so angesteuert wird, daß sie nach dem Auslegen des zweiten Ganges den Radsatz des dritten Ganges drehfest, also schlupffrei, mit der Abtriebswelle des Getriebes verbindet. Hierbei ähnelt der Schaltvorgang vom zweiten in den dritten Gang somit den Schaltvorgängen bei einem "echten" Doppelkupplungsgetriebe. Hingegen können bei einem solchen Getriebe keine Zugkraftunterbrechungen gelindert werden, die in den Gangwechseln von 3 nach 4, von 4 nach 5, von 5 nach 6 etc. auftreten.

Es versteht sich, daß unter einem Getriebe mit N-Gängen derzeit übliche 5-Gang- und 6-Ganggetriebe verstanden werden können, jedoch natürlich auch 3-Gang- oder 4-Ganggetriebe sowie 7-Gang-, 8-Ganggetriebe und Getriebe mit noch mehr Gängen.

Es müssen nur vergleichsweise wenig Kupplungen während einer automatischen Steuerung des Getriebes geschaltet werden. Es wird nur vergleichsweise wenig Bauraum benötigt, sowohl in axialer wie in radialer Richtung.

Schließlich ist es unter bestimmten Voraussetzungen möglich, die Schaltkupplungen zum Schalten der ersten Kraftübertragungszweige sämtlich als unsynchronisierte, formschlüssig wirkende Klauenkupplungen auszuführen.

Zu diesen Voraussetzungen kann gehören, daß bei automatisierten Schaltvorgängen nicht nur auf das Getriebe sondern auch auf den Kraftfahrzeugmotor Einfluß genommen wird, um die miteinander zu verbindenden Elemente miteinander zu synchronisieren.

Schließlich versteht sich, daß unter einer Betätigung der Reibungskupplung, je nach Zusammenhang, sowohl solche Betätigungen zu verstehen sind, bei denen die Reibungskupplung im Schlupf arbeitet, als such solche Betätigungen, bei denen die Reibungskupplung die miteinander zu kuppelnden Elemente drehfest verbindet.

Vorzugsweise ist eine einzige Reibungskupplung vorgesehen, die einem einzigen der Vorwärtsgänge 3 bis N-1 zugeordnet ist.

Durch diese Maßnahme wird der konstruktive Aufwand möglichst klein gehalten. Die oben erwähnten, entscheidenden Vorteile werden auch dann erzielt, wenn nur eine einzige Reibungskupplung zusätzlich zu der Trennkupplung des Kraftfahrzeug-Antriebsstranges vorgesehen ist.

Gemäß einer weiteren bevorzugten Ausführungsform ist die Reibungskupplung dem N-1. Vorwärtsgang zugeordnet.

Hierdurch wird im Rahmen der Erfindung ein größerer Wert auf eine Zugkraftüberbrückung in möglichst vielen Gängen gelegt, und vergleichsweise weniger Wert auf eine hohe Zugkraftüberbrückung in den unteren Gangwechseln.

Gemäß einer alternativen Ausführungsform ist die Reibungskupplung im N-2. Vorwärtsgang zugeordnet.

Bei dieser Ausführungsform wird im Rahmen der Erfindung etwas weniger Gewicht auf die Zugkraftüberbrückung in den höheren Gängen, dagegen wesentlich mehr Gewicht auf die Zugkraftüberbrückung in den unteren Gängen gelegt.

Gemäß einer weiteren alternativen Ausführungsform ist die Reibungskupplung dem 3. Vorwärtsgang zugeordnet.

Bei dieser Ausführungsform wird besonderer Wert auf eine möglichst hohe Zugkraftüberbrückung in den unteren Gängen, insbesondere bei Gangwechseln 1-2 und 2-3 gelegt.

Von Vorzug ist es ferner, wenn die Länge der Reibungskupplung in Richtung der Erstreckung der Welle im wesentlichen der Länge einer Schaltkupplung mit Synchroneinheit entspricht.

Auf diese Weise ist es möglich, herkömmliche, bewährte Getriebeanordnungen gemäß der Erfindung auszugestalten. Aufgrund der Längenübereinstimmung kann der normalerweise von der Schaltkupplung mit Synchroneinheit innerhalb des Getriebes beanspruchte Bauraum in axialer Richtung vollkommen für die Reibungskupplung verwendet werden. Dies hat ferner den Vorteil, daß der von den Schaltkupplungen mit Synchroneinheit in radialer Richtung häufig nicht voll ausgenutzte Raum von der Reibungskupplung mit beansprucht werden kann.

Ferner ist es von besonderem Vorzug, wenn das Stufengetriebe hohlwellenfrei ausgebildet ist.

Im Gegensatz zu Doppelkupplungsgetrieben und vielen Stufengetrieben mit Zugkraftüberbrückung, die auf Hohlwellenkonstruktionen zurückgreifen, ist der bauliche Aufwand bei der vorliegenden Ausführungsform außerordentlich niedrig. Ein solches Stufengetriebe kann somit besonders kostengünstig hergestellt werden.

Gemäß einem weiteren bevorzugten Beispiel ist die Reibungskupplung baulich getrennt von der Trennkupplung angeordnet.

Auf diese Weise ist es möglich, eine herkömmliche Trennkupplung in dem erfindungsgemäßen Kraftfahrzeug-Antriebsstrang vorzusehen, wie sie auch bei anderen Stufengetrieben verwendet wird. Die Trennkupplung dient dabei insbesondere noch zum Anfahren und für Schaltungen im Schubbetrieb. Die Schnittstelle zwischen der Kupplung und dem Getriebe kann unverändert bleiben.

Bei dem erfindungsgemäßen Steuerverfahren ist es von besonderem Vorzug, wenn die Reibungskupplung in einem Zeitraum im Verlauf der Schritte a) und b) wenigstens das volle Motordrehmoment multipliziert mit dem Übersetzungsverhältnis des zugeordneten Ganges überträgt.

Von besonderem Vorzug ist es ferner, wenn die Reibungskupplung in einem weiteren Zeitraum im Verlauf der Schritte a) und b) durch Verzögerung der Antriebswelle zusätzlich einen Teil der Eenergie, die aus dem Trägheitsmoment der mit der Antriebswelle mitdrehenden Elemente resultiert, auf die Abtriebswelle überträgt.

Nach dem Auslegen des zuvor eingelegten Ganges kann die Reibungskupplung somit dazu verwendet werden, die Abtriebswelle des Motors und somit die mit ihr mitdrehenden Teile bzw. Elemente abzubremsen und hierdurch die in diesen Teilen gespeicherte rotatorische Energie auf die Abtriebswelle zu geben. Hierdurch wird der während der Zugkraftunterbrechung im Rahmen der ersten Kraftübertragungszweige auftretende Schaltruck noch weiter gemildert.

Dabei ist es besonders bevorzugt, wenn das Motordrehmoment bei Schaltungen im Teillastbereich in dem weiteren Zeitraum erhöht wird.

Dies kann beispielsweise durch vollständiges Öffnen der Drosselklappe erfolgen. Hierdurch wird erreicht, daß das über die Reibungskupplung auf die Abtriebswelle in dem weiteren Zeitraum übertragene Drehmoment maximiert wird, der Schaltruck insofern noch weiter minimiert oder sogar vollkommen unmerklich gemacht wird.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.

Fig. 1    zeigt eine schematische Darstellung eines Kraftfahrzeug-Antriebsstranges gemäß einer ersten Ausführungsform der Erfindung;

Fig. 2    eine schematische Darstellung eines Kraftfahrzeug-Antriebsstranges gemäß einer zweiten erfindungsgemäßen Ausführungsform;

Fig. 3    eine Darstellung des Verlaufes des Getriebeabtriebsmomentes über der Zeit;

Fig. 4    eine schematische Darstellung eines Kraftfahrzeug-Antriebsstranges gemäß einer dritten erfindungsgemäßen Ausführungsform;

Fig. 5    eine schematische Darstellung eines Kraftfahrzeug-Antriebsstranges gemäß einer vierten erfindungsgemäßen Ausführungsform; und

Fig. 6    eine schematische Darstellung eines Kraftfahrzeug-Antriebsstranges gemäß einer fünften erfindungsgemäßen Ausführungsform.

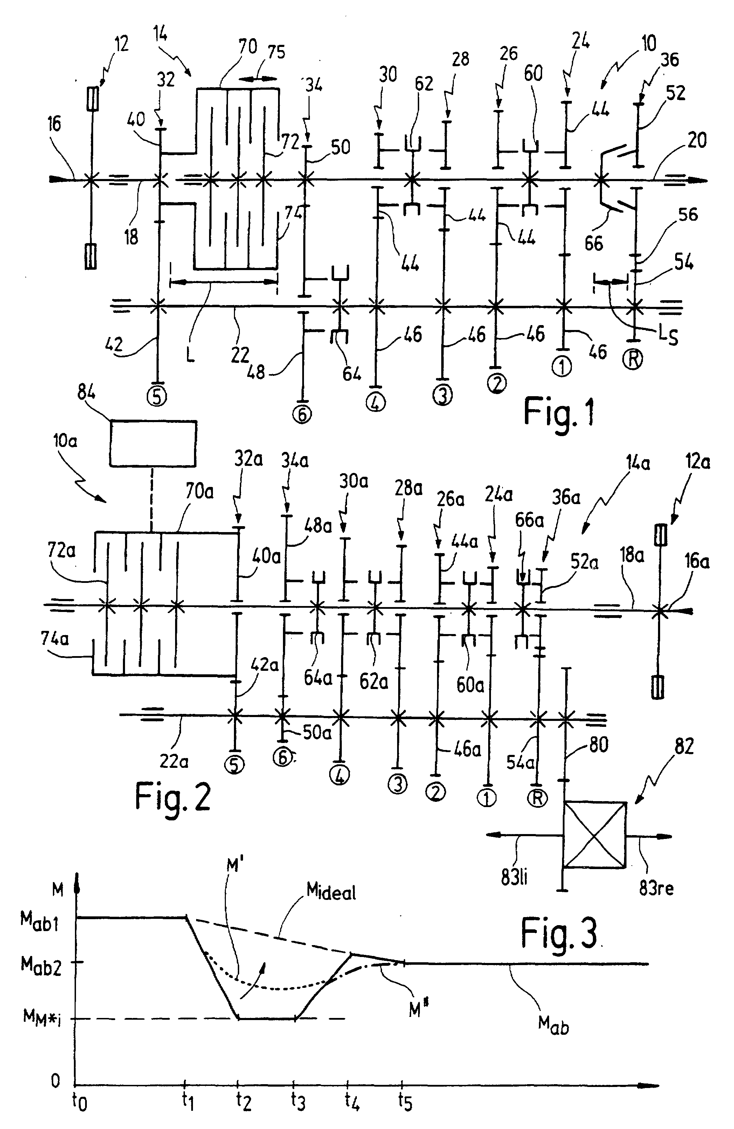

Eine erste Ausführungsform eines erfindungsgemäßen Antriebsstranges eines Kraftfahrzeuges ist in Fig. 1 generell mit 10 bezeichnet.

Der Antriebsstrang umfaßt eine Trennkupplung 12 und ein Stufengetriebe 14.

Die Trennkupplung 12 verbindet eine Antriebswelle 16 eines Kraftfahrzeugmotors mit einer Getriebeeingangswelle 18 oder trennt diese beiden Wellen voneinander. Das Stufengetriebe 14 kann somit vollständig von dem Antriebsdrehmoment des Kraftfahrzeugmotors abgekoppelt werden.

Das Stufengetriebe 14 ist in Vorgelegebauart ausgeführt und umfaßt neben der Getriebeeingangswelle 18 eine axial hierzu ausgerichtete Getriebeausgangswelle 20 sowie eine parallel zu den beiden Wellen 18, 20 ausgerichtete Vorgelegewelle 22.

Das Stufengetriebe 14 umfaßt eine Mehrzahl von Radsätzen 24, 26, 28, 30, 34, 36, die - in dieser Reihenfolge - Vorwärtsgängen 1 bis 4, 6 bzw. einem Rückwärtsgang R des Stufengetriebes 14 zugeordnet sind.

Der Radsatz 32 ist als Konstante ausgebildet und umfaßt ein mit der Getriebeeingangswelle 18 drehfest verbundenes Rad 40 und ein mit der Vorgelegewelle 22 drehfest verbundenes Rad 42. Der 5. Gang ist, wie nachstehend noch erläutert wird, als direkter Gang ausgebildet.

Die anderen Radsätze sind an der Getriebeausgangswelle 20 und der Vorgelegewelle 22 angeordnet, und zwar ausgehend von dem Getriebeeingang hinter dem Radsatz 32 für den fünften Gang in der Reihenfolge 34, 30, 28, 26, 24, 36 entsprechend den Gängen 6, 4, 3, 2, 1, R. Mit anderen Worten liegt der Radsatz 36 für den Rückwärtsgang R in Bezug auf den Radsatz 32 am gegenüberliegenden Ende des Stufengetriebes 14. Der Radsatz 36 kann jedoch auch irgendwo zwischen den anderen Gängen liegen.

Die Radsätze 24 bis 30 für den ersten bis vierten Gang umfassen jeweils ein Losrad 44, das an der Getriebeausgangswelle 20 drehbar gelagert ist, und ein jeweiliges Festrad 46, das drehfest mit der Vorgelegewelle 22 verbunden ist.

Der Radsatz 34 für den sechsten Gang umfaßt ein an der Vorgelegewelle 22 drehbar gelagertes Losrad 48 und ein drehfest mit der Getriebeausgangswelle 20 verbundenes Festrad 50. Der Radsatz 36 für den Rückwärtsgang umfaßt ein an der Getriebeausgangswelle 20 drehbar gelagertes Losrad 52, ein drehfest mit der Vorgelegewelle 22 verbundenes Festrad 54 und ein schematisch angedeutetes Zwischenrad 56 zur Drehrichtungsumkehr.

Zum Ein- und Auslegen der Gänge 1 bis 4 sind an der Getriebeausgangswelle 20 zwei Schaltkupplungen 60, 62 vorgesehen, die als Klauenkupplungen ohne Synchronisierung ausgeführt sein können. Die Schaltkupplung 60 dient zum Einlegen entweder des ersten oder des zweiten Ganges. Die Schaltkupplung 62 dient zum Einlegen entweder des dritten oder des vierten Ganges.

An der Vorgelegewelle 22 ist ferner eine Schaltkupplung 64 für den sechsten Gang vorgesehen, an der Getriebeausgangswelle 20 ferner eine Schaltkupplung 66 für den Rückwärtsgang R. In Fig. 1 ist gezeigt, daß die Schaltkupplung 66 für den Rückwärtsgang beispielsweise mit einer Synchronisierung versehen sein kann. Auch die Schaltkupplung 64 ist vorzugsweise mit einer Synchronisierung versehen, obgleich dies in Fig. 1 nicht dargestellt ist.

Soweit bisher beschrieben, kann das Stufengetriebe 14 herkömmlicher Bauart sein. Auch die Schaltkupplungen 60, 62 können mit Synchronisierungen ausgestattet sein.

Erfindungsgemäß umfaßt das Stufengetriebe 14 eine Reibungskupplung 70, die dem fünften Gang zugeordnet ist. Die Reibungskupplung 70 ist als Lamellenkupplung ausgebildet und umfaßt eine erste Mehrzahl von Lamellen 72, die drehfest mit der Getriebeausgangswelle 20 verbunden sind, und eine zweite Mehrzahl von Lamellen 74, die drehfest mit dem Rad 40 des Radsatzes 32 für den fünften Gang verbunden sind. Alternativ können die zweiten Lamellen 74 natürlich auch direkt mit der Getriebeeingangswelle 18 drehfest verbunden sein, ohne die Zuordnung der Reibungskupplung 70 zu dem fünften Gang des Stufengetriebes 14 aufzulösen. Die Lamellenkupplung 70 ist mittels eines Aktuators in an sich herkömmlicher Weise betätigbar, insbesondere stufenlos regelbar.

Die Reibungskupplung 70 ist in Fig. 1 vergrößert dargestellt und besitzt in axialer Richtung des Stufengetriebes 14 eine Länge L. Die Länge L kann bei einem Stufengetriebe so gewählt sein, daß sie der Länge einer herkömmlichen Schaltkupplung mit Synchroneinheit entspricht, wie sie schematisch in Fig. 1 bei $L_s$ angedeutet ist.

Anstelle einer Lamellenkupplung kann die Reibungskupplung 70 in jeder anderen beliebigen Form ausgebildet sein, vorausgesetzt, die Reibungskupplung ist zur Drehmomentübertragung im Schlupfbetrieb in einer Größenordnung entsprechend mindestens dem Motorabtriebsmoment geeignet.

Dadurch, daß die axiale Länge der Reibungskupplung 70 an die Länge $L_s$ einer Schaltkupplung mit Synchroneinheit angepaßt ist, können an sich bekannte und erprobte Getriebekonstruktionen auf einfachste Weise umkonstruiert werden, derart, daß der ansonsten für die Schaltkupplung mit Synchroneinheit vorhandene axiale Bauraum für die Reibungskupplung 70 verwendet wird. Der Radsatz, dem die Reibungskupplung 70 zugeordnet wird, benötigt, wie nachstehend noch erläutert wird, dann keine eigene Schaltkupplung mehr. Generell wird der in einem Getriebe in radialer Richtung zur Verfügung stehende Bauraum von herkömmlichen Schaltkupplungen mit Synchroneinheit nicht ausgenutzt. Dieser zusätzliche Bauraum kann von einer Reibungskupplung 70 ausgenutzt werden.

Der in Fig. 1 dargestellte Antriebsstrang 10 dient zum Einbau in Kraftfahrzeugen mit der klassischen Anordnung eines Frontmotors und Heckantrieb, wobei der Kraftfahrzeug-Antriebsstrang 10 längs eingebaut wird, so daß die Getriebeausgangswelle 20 direkt in eine Kardanwelle übergehen kann.

In Fig. 2 ist eine weitere erfindungsgemäße Ausführungsform eines Antriebsstrangs 10a gezeigt, der zum Quereinbau in einem Kraftfahrzeug mit Frontmotor und Frontantrieb geeignet ist.

Die Antriebseinheit 10a weist gleichfalls eine herkömmliche Trennkupplung 12a auf, die eine Abtriebswelle 16a eines Kraftfahrzeugmotors mit einer Getriebeeingangswelle 18a eines Stufengetriebes 14a verbindet.

Die Getriebeeingangswelle 18a erstreckt sich im Gegensatz zu der Getriebeeingangswelle 18 des Stufengetriebes 14 der Fig. 1 in axialer Richtung im wesentlichen vollständig durch das Stufengetriebe 14a. Ausgehend von dem Getriebeeingang sind in dieser Reihenfolge Radsätze 36a, 24a, 26a, 28a, 30a, 34a, 32a für einen Rückwärtsgang R sowie für die Vorwärtsgänge 1, 2, 3, 4, 6, 5 vorgesehen.

Die Losräder 44a, 48a, 52a der Gänge 1 bis 4, 6 und R sind drehbar an der Getriebeeingangswelle 18a gelagert. Auch der Radsatz 32a für den fünften Gang weist ein Losrad 40a auf, das drehbar an der Getriebeeingangswelle 18a gelagert ist.

Die entsprechenden jeweiligen Festräder 42a, 46a, 50a, 54a dieser Radsätze sind drehfest mit einer Vorgelegewelle 22a verbunden, die gleichzeitig eine Getriebeausgangswelle darstellt und über ein Stirnrad 80 mit einem Differential 82 verbunden ist, das das Drehmoment schließlich an zwei Abtriebswellen 83li bzw. 83re abgibt.

Bei dieser Ausführungsform sind sämtliche Schaltkupplungen als Klauenkupplung ohne Synchronisierung vorgesehen. Eine Klauenkupplung 60a ist zwischen den Radsätzen 24a, 26a angeordnet und dient zum Schalten des ersten oder des zweiten Ganges. Eine Klauenkupplung 62a ist zwischen den Radsätzen 28a, 30a angeordnet und dient zum Schalten des dritten oder des vierten Ganges. Eine Klauenkupplung 64a ist zwischen den Radsätzen 30a, 34a angeordnet und dient zum Schalten des sechsten Ganges. Eine Klauenkupplung 66a ist zwischen den Radsätzen 24a, 36a angeordnet und dient zum Schalten des Rückwärtsganges. Sämtliche Klauenkupplungen sind an der Getriebeeingangswelle 18a angeordnet.

Das Stufengetriebe 14a weist ferner eine Reibungskupplung 70a auf, die vom Getriebeeingang aus gesehen, hinter dem Radsatz 32a angeordnet ist und dazu ausgelegt ist, das Losrad 40a mit der Getriebeeingangswelle 18a stufenlos regelbar im Schlupfbetrieb oder drehfest zu verbinden oder diese beiden Elemente voneinander zu trennen. Zu diesem Zweck ist die Reibungskupplung 70a mit einem Aktuator 84 gekoppelt, der die Lamellen 72a, 74a mehr oder weniger aneinander preßt. Der Aktuator 84 kann als Elektromotor ausgebildet sein, kann jedoch auch durch ein fluidisches, insbesondere hydraulisches Stellglied gebildet sein. Denkbar ist auch eine Ausbildung des Aktuators 84 in Form eines Magnetstellgliedes.

In den oben beschriebenen Beispielen wurde eine Reibungskupplung 70, 70a jeweils dem zweithöchsten (N-1.) Gang des N-Gang-Getriebes, nämlich dem fünften Gang zugeordnet. Es ist jedoch im Rahmen der Erfindung genauso möglich, eine Reibungskupplung dem vierten oder dem dritten Gang zuzuordnen. Bei einem 7-Ganggetriebe ist es auch denkbar, eine Reibungskupplung dem sechsten Gang zuzuordnen. Auch ist es denkbar, eine Reibungskupplung nur dem zweiten Gang zuzuordnen. Da generell im ersten Gang angefahren werden soll, und zwar mittels der herkömmlichen Trennkupplung 12, 12a, macht es keinen Sinn, dem ersten Gang eine Reibungskupplung zuzuordnen. In allen anderen, oben beschriebenen Fällen ist es jedoch möglich, bei Schaltvorgängen in den unteren Gängen eine höhere Zugkraftüberbrückung zu realisieren als in einem Fall, bei dem eine Reibungskupplung dem höchsten Gang zugeordnet wird.

Die Funktionsweise der oben beschriebenen Kraftfahrzeug-Antriebsstränge 10, 10a wird nachstehend unter Bezugnahme auf Fig. 3 erläutert. Fig. 3 zeigt in durchgezogener Linie den Verlauf eines Abtriebsmomentes der Stufengetriebe 14, 14a über der Zeit, und zwar während eines Gangwechsels im Rahmen der Gänge 1 bis 4 im Zugbetrieb unter Last (d.h. bei geschlossener Trennkupplung 12, 12a). Mit anderen Worten zeigt Fig. 3 in schematischer, stark vereinfachter Form den Verlauf des Abtriebsmomentes bei Gangwechseln 1-2, 2-3, 3-4.

Im folgenden soll beispielhaft ein Gangwechsel vom zweiten in den dritten Gang beschrieben werden, und zwar unter Bezugnahme auf den in Fig. 1 gezeigten Kraftfahrzeug-Antriebsstrang 10. Es versteht sich, daß die folgende Beschreibung genauso auf die Gangwechsel 1-2, 3-4 anwendbar ist sowie auf den Antriebsstrang 10a.

Ausgehend von einem Zustand, in dem der zweite Gang eingelegt ist, geht der Kraftfluß bis zu einem ersten Zeitpunkt ausschließlich von der Trennkupplung 12 über die Festräder 40, 42, die Vorgelegewelle 22 den Radsatz 26 und die Schaltkupplung 60 zur Getriebeausgangswelle 20. Die Getriebeantriebswelle 18 dreht sich dabei schneller als die Getriebeausgangswelle 20. Wird nun die Reibungskupplung 70 geschlossen (ab $t_1$), teilt sich der Kraftfluß auf in einen ersten Kraftübertragungszweig über die Vorgelegewelle 22 und den Radsatz 26, sowie einen zweiten Kraftübertragungszweig über die Reibungskupplung 70. Beide Kraftübertragungszweige werden auf die Getriebeausgangswelle 20 geführt und addieren sich dort. Je stärker die Reibungskupplung 70 geschlossen wird, um so mehr Drehmoment fließt über den zweiten Zweig und um so weniger Drehmoment fließt über den ersten Zweig, bis bei $t_2$ schließlich das komplette, an der Getriebeeingangswelle 18 anliegende Drehmoment über den zweiten Zweig, also über die Reibungskupplung 70 auf die Getriebeausgangswelle 20 fließt. Der erste Zweig ist dann lastlos.

Die Antriebswelle 18 und die Abtriebswelle 20 haben bis zu diesem Zeitpunkt $t_2$ noch ihre ursprünglichen, voneinander unterschiedlichen Drehzahlen (vorausgesetzt, das Kraftfahrzeug fährt während des Schaltvorganges mit einer konstanten Geschwindigkeit). Genau ab dem Moment, in dem der erste Zweig lastlos wird ($t_2$), kann der in diesem Zweig geschaltete Gang herausgenommen werden, indem die Schaltkupplung 60 nach rechts bewegt wird und somit das Losrad 44 des Radsatzes 26 von der Getriebeausgangswelle 20 trennt. Danach wird durch weiteres Schließen der Reibungskupplung 70 die sich noch immer mit der Ausgangsdrehzahl drehende Antriebswelle 18 verzögert, und zwar exakt auf die Drehzahl, bei der das Losrad 44 (der dritte Gang) die gleiche Drehzahl hat wie die Getriebeausgangswelle 20 und damit die Drehzahl der Schaltkupplung 62 (Synchrondrehzahl). Dann kann der dritte Gang eingelegt werden ($t_3$), indem die Schaltkupplung 62 nach rechts bewegt wird. Die Reibungskupplung 70 wird nun wieder geöffnet, solange bis bei einem zweiten Zeitpunkt $t_5$ der neue - dritte - Gang im ersten Zweig das komplette Moment übernommen hat. Die Trennkupplung 12 wird während des gesamten Schaltvorganges nicht geöffnet.

Eine Rückschaltung im Zugbetrieb erfolgt ähnlich und wird im folgenden an Hand eines Schaltvorganges vom zweiten in den ersten Gang bei dem Stufengetriebe 14a der Fig. 2 erläutert. Zunächst läuft das Drehmoment über die Getriebeeingangswelle 18a, die Schaltkupplung 60a, den Radsatz 26a über die Vorgelegewelle 22a. Beim Einleiten des Schaltvorganges wird die Reibungskupplung 70a geschlossen, bis dieser erste Zweig momentenfrei ist. Dann wird der zweite Gang herausgenommen, indem die Schaltkupplung 60a nach rechts bewegt wird. Aufgrund der Rückschaltung muß der Motor jedoch nun auf eine höhere Drehzahl gebracht werden. Dies geschieht, indem man die Reibungskupplung 70 wieder leicht öffnet und die Drehzahl der Getriebeeingangswelle 18a so lange erhöht, bis das Losrad des Radsatzes 24a des ersten Ganges die gleiche Drehzahl hat wie die Schaltkupplung 60a (Synchrondrehzahl). Dann kann der erste Gang eingelegt werden und die Reibungskupplung 70a öffnet, so daß der erste Zweig und damit der erste Gang das komplette Drehmoment übernimmt.

Im Schubbetrieb müssen die Kraftfahrzeug-Antriebsstränge 10, 10a wie ein konventionelles Getriebe durch Öffnen der Trennkupplung 12, 12a geschaltet werden.

In der stark schematisierten und zeitlich verzerrten Darstellung der Fig. 3 liefert der Kraftfahrzeugmotor ein Drehmoment $M_M$. Mit der Übersetzung des zweiten Ganges ergibt sich das Drehmoment $M_{ab1}$ an der Getriebeausgangswelle 20 zu $M_{ab1} = M_M \cdot i_2$.

Dies gilt bis zu einem Zeitpunkt $t_1$. Ab einem Zeitpunkt $t_5$ ergibt sich das Abtriebsdrehmoment $M_{ab}$ an der Getriebeausgangswelle 20 durch die Multiplikation des Motordrehmomentes $M_M$ mit der Übersetzung des dritten Ganges ($M_{ab2} = M_H \cdot i_3$). Es wird bei der folgenden Erläuterung idealisiert angenommen, daß das Motordrehmoment bei $t_1$ und bei $t_5$ gleich groß ist, was natürlich selbst bei gleicher Drosselklappenstellung wegen der Drehzahlabhängigkeit des Motormomentes $M_M$ nicht exakt stimmt.

Bei $t_1$ beginnt die Reibungskupplung 70 durch Betätigung ihres Aktuators 75 Drehmoment zu übertragen. Sie überträgt bei $t_2$ schließlich das komplette Motormoment $M_M$ multipliziert mit dem Übersetzungsverhältnis des 5. Ganges, dem die Reibungskupplung zugeordnet ist, so daß zwischen $t_2$ und $t_3$ der bisherige zweite Gang herausgenommen werden kann, da der erste Zweig über die Vorgelegewelle 22 lastlos ist. Bis $t_3$ sind alle Drehzahlen konstant geblieben, auch die der Antriebswelle 18. Bis zu diesem Zeitpunkt $t_3$ errechnet sich das Moment an der Getriebeausgangswelle 20 folgendermaßen:

$$M_{ab} = x_1 \cdot M_M \cdot i_2 + x_2 \cdot M \cdot i_5 \qquad (1)$$

wobei $x_1$ = Anteil von $M_M$, der über den ersten Kraftübertragungszweig geht,
$x_2$ = Anteil von $M_M$, der über den zweiten Kraftübertragungszweig geht, bei
$x_1 + x_2 = 1$, und
$i_2$ = Übersetzung des zweiten Ganges, $i_5$ = Übersetzung des 5. Ganges (im vorliegenden Fall: $i_5 = 1$).

Die obige Formel gilt, solange die Drehzahl der Antriebswelle 18 konstant ist, also für den kompletten Schaltungsablauf von $t_0$ bis $t_3$ und wieder ab $t_5$.

Zwischen $t_3$ und $t_5$ wird das komplette Motormoment $M_M$ (multipliziert mit $i_5$) von dem zweiten Kraftübertragungszweig über die Reibungskupplung 70 übertragen und die Antriebswelle 18 verzögert. Das Drehmoment, welches zwischen $t_3$ und $t_5$ auf die Getriebeausgangswelle 20 übertragen werden kann, setzt sich zusammen zum einen aus dem Motormoment $M_M$ (multipliziert mit $i_5$) und zum anderen aus der Verzögerung der Antriebswelle 18 (und der über die Trennkupplung 12 mit der Antriebswelle 16 verbundenen Teile, d. h. der Trennkupplung 12 selbst, des Schwungrades und des Motors etc.).

Das auf die Getriebeausgangswelle 20 übertragene Drehmoment errechnet sich folglich zwischen $t_3$ und $t_5$ folgendermaßen:

$$M_{ab} = M_M + M_J = M_M + J_{ges} \cdot \dot{\omega} \qquad (2)$$

Dabei ist $M_J$ das durch die Verzögerung der mit der Antriebswelle 18 verbundenen Teile einhergehende Drehmoment, das berechnet wird durch Multiplikation des gesamten Massenträgheitsmomentes der verzögerten Teile ($J_{ges}$) mit der Winkelbeschleunigung (entsprechend der Winkelverzögerung).

Ziel ist es natürlich, einen möglichst harmonischen Momentenübergang von $M_{ab1}$ auf $M_{ab2}$ zu erhalten. Ein solcher idealer Übergang ist in Fig. 3 gestrichelt bei $M_{ideal}$ dargestellt. Ein solcher Momentenübergang ließe sich beispielsweise mit einem "echten" Doppelkupplungsgetriebe realisieren, wie eingangs beschrieben.

Ohne jede Zugkraftüberbrückung würde normalerweise das Abtriebsdrehmoment ab dem Zeitpunkt $t_1$ bis auf Null abfallen, im Extremfall sogar ins Negative übergehen, also einen Schub verursachen. Durch die Zugkraftüberbrückung mittels der Reibungskupplung 70 wird immer wenigstens das an der Eingangswelle 18 anstehende Motormoment, multipliziert mit der Übersetzung des fünften Ganges (oder eines anderen Ganges von N-1 bis 3) übertragen.

Bei dem Gangwechsel wird zur weiteren Optimierung ferner angestrebt, den Zeitraum zwischen $t_1$ und $t_3$ möglichst kurz zu halten, d.h. den alten Gang möglichst schnell herauszuholen, so daß der Fahrer möglichst nichts oder wenig davon spürt. Anschließend kann das Abtriebsmoment im Rahmen der sich aus der obigen Gleichung (2) ergebenden Möglichkeiten eingestellt werden.

Wenn der in Fig. 3 dargestellte Verlauf von $M_{ab}$ zwischen $t_1$ und $t_3$ sehr kurz ist gegenüber dem Zeitraum von $t_3$ bis $t_5$, ist es möglich, das Abtriebsmoment $M_{ab}$ bis auf die Ideallinie $M_{ideal}$ hochzuregeln. Diese Möglichkeit ist in Fig. 3 bei M' dargestellt. Es ist jedoch auch möglich, nach dem Zeitpunkt $t_3$ das Abtriebsmoment $M_{ab}$ auf das Niveau des nächsten Ganges (des dritten Ganges) zu fahren ($M_{ab2}$) und es dann ab etwa $t_4$ konstant zu belassen. Letztere Möglichkeit ist in Fig. 3 dargestellt bei M".

Die Variation des Abtriebsmomentes $M_{ab}$ im Zeitraum zwischen $t_3$ und $t_5$ wird durch eine möglichst hohe Verzögerung (großer Betrag von $\dot{\omega}$) erreicht. Dies kann durch eine möglichst schnelle Erhöhung der Anpreßkraft der Lamellen der Reibungskupplung 70 erhalten werden.

Ferner ist es möglich, das Abtriebsmoment $M_{ab}$ im Zeitraum zwischen $t_2$ und $t_5$ zu erhöhen und an das Idealmoment $M_{ideal}$ anzupassen, indem das Motormoment $M_M$ erhöht, beispielsweise bei Schaltungen im Teillastbetrieb durch stärkeres Öffnen der Drosselklappe.

Es versteht sich, daß das in Bezug auf den Kraftfahrzeug-Antriebsstrang 10 bei einem Gangwechsel unter Zug beschriebene Verfahren genauso anwendbar ist auf andere Schaltgetriebeformen. Das Verfahren ist vollkommen unabhängig von der Anordnung der einzelnen Gänge bzw. deren Radsätze innerhalb des Getriebes. So läßt sich die Reibungskupplung 70 bei allen gängigen und erprobten Stufengetrieben beispielsweise dort einbauen, wo bislang die Schaltkupplung mit Synchroneinheit für den gewählten Überbrückungsgang angeordnet sind.

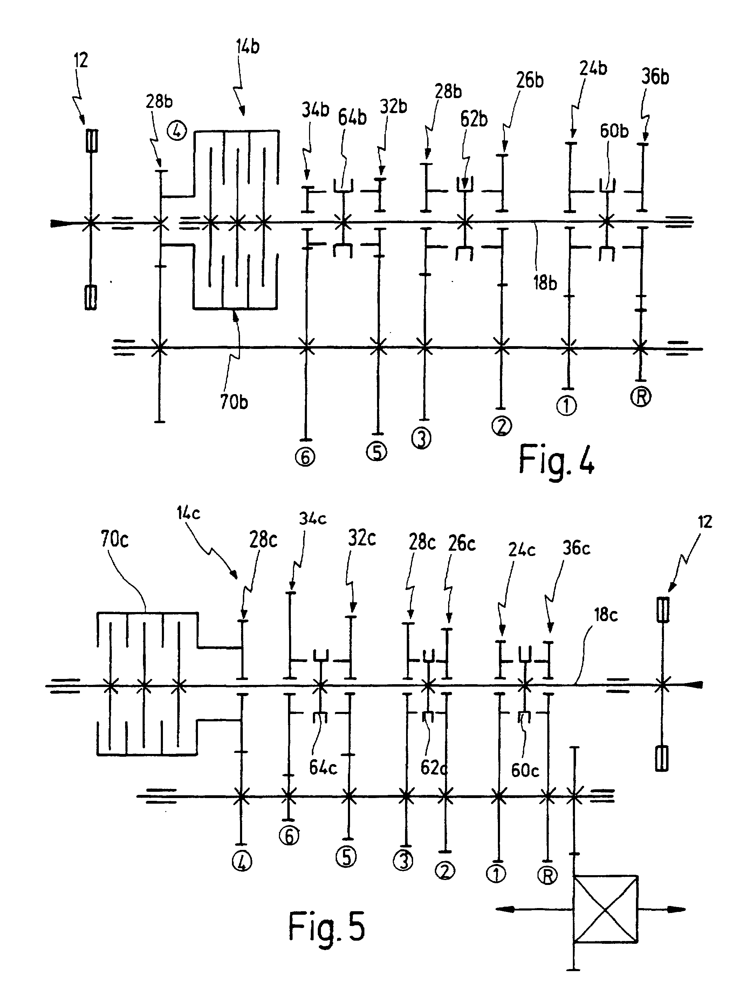

In den Fig. 4 und 5 sind eine dritte und eine vierte Ausführungsform eines Kraftfahrzeug-Antriebsstranges gezeigt, die im wesentlichen den Ausführungsformen der Fig. 1 bzw. 2 entsprechen. Bei den Ausführungsformen der Fig. 4 und 5 ist jedoch als Überbrückungsgang jeweils nicht der fünfte Gang vorgesehen, sondern der vierte Gang. Insofern ist bei einem Getriebe 14b der Fig. 4 anstelle des Radsatzes 30 für den vierten Gang ein Radsatz 32b für den fünften Gang zwischen den Radsätzen für den dritten und dem sechsten Gang vorgesehen. Ein weiterer Unterschied ist, daß sämtliche Losräder der einzelnen Radsätze für die Gänge R, 1 bis 3, 5, 6 an der Getriebeeingangswelle 18b angeordnet sind. Ferner sind bei dieser Ausführungsform sämtliche Schaltkupplungen als nichtsynchronisierte Klauenkupplungen ausgebildet. Eine Klauenkupplung 60b ist zwischen den Radsätzen 24b, 36b angeordnet und dient zum Schalten des ersten oder des Rückwärtsganges. Eine Klauenkupplung 62b ist zwischen den Radsätzen 26b, 28b angeordnet und dient zum Schalten des zweiten oder des dritten Ganges. Eine Klauenkupplung 64b ist zwischen den Radsätzen 32b, 34b angeordnet und dient zum Schalten des fünften oder des sechsten Ganges.

Entsprechende Änderungen ergeben sich bei dem Getriebe 14c der Fig. 5, das entsprechend zu dem Stufengetriebe 14a der Fig. 2 als Getriebe für den Quereinbau ausgelegt ist. Auch bei dieser Ausführungsform ist der vierte Gang als Überbrückungsgang ausgelegt. Entsprechend ist der Radsatz 28c einer Reibungskupplung 70c zugeordnet. Ferner sind nur drei Klauenkupplungen 60c, 62c, 64c an der Getriebeeingangswelle angeordnet, zum Schalten der Gänge 1-R, 2-3, bzw. 5-6.

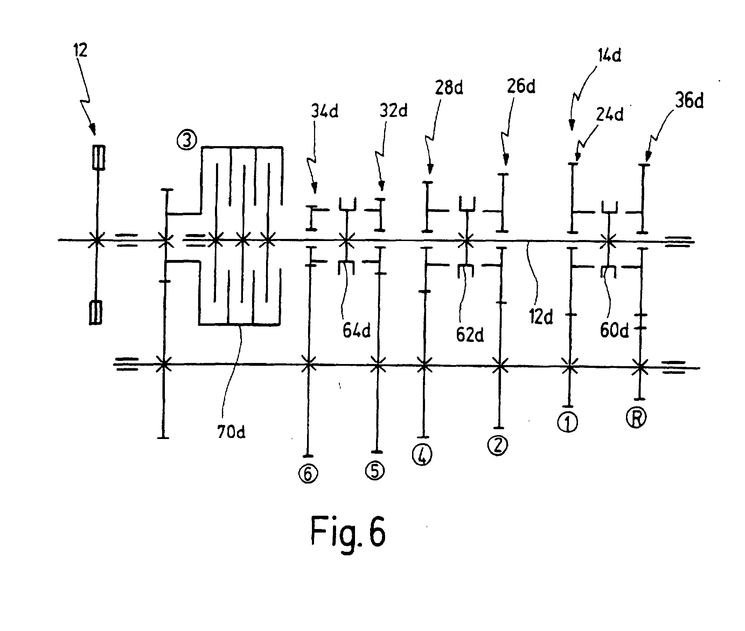

In Fig. 6 ist schließlich eine Ausführungsform gezeigt, bei der der dritte Gang als Überbrückungsgang ausgelegt ist. Im übrigen entspricht das Getriebe 14d der Fig. 6 weitgehend dem der Fig. 4. Klauenkupplungen 60d, 62d, 64d an der Getriebeeingangswelle 18d dienen zum Schalten der Gänge R-1, 2-4, bzw. 5-6.

Optional ist es zur Erleichterung des Gangherausnehmens bei Schaltvorgängen unter Zug möglich, in den ersten Zweig einen Freilauf einzubringen, der überrollt, sobald die Drehzahl des ersten Zweiges abfällt. Dieser Freilauf müßte jedoch für den Schubbetrieb abschaltbar sein.

Die erfindungsgemäßen Kraftfahrzeug-Antriebsstränge weisen sich aus durch geringe Kosten und kleinen Bauraum. Es ist keine integrierte Doppelkupplung notwendig. Die Trennkupplung 12 kann herkömmlicher Art sein und nur noch zum Anfahren und für Schaltungen im Schub dienen. Es kann das höhere Moment eines niedrigeren Ganges als des höchsten Ganges zur Zugkraftüberbrückung herangezogen werden. Die Schnittstelle zwischen der Trennkupplung und dem Getriebe bleibt in der Regel unverändert. Es sind keine weiteren Kupplungen mit Ausnahme der Reibungskupplung notwendig. Die Trennkupplung und die zusätzliche Reibungskupplung lassen sich schnell öffnen.

**Patentansprüche**

**1.** Automatisierbarer Kraftfahrzeug-Antriebsstrang (10) mit einem Stufengetriebe (14) und einer Trennkupplung (12), die zwischen einem Motor des Kraftfahrzeuges und dem Stufengetriebe (14) geschaltet ist, wobei das Stufengetriebe (14) eine Mehrzahl von Radsätzen (24-36) entsprechend N Vorwärtsgängen und wenigstens einem Rückwärtsgang (R) aufweist, wobei erste Losräder (44) einer ersten Anzahl (24-30) der Radsätze (24-36) mittels Schaltkupplungen (60,62) unter Einrichtung jeweiliger erster Kraftübertragungszweige mit einer sie tragenden Welle (20) drehfest verbindbar sind, während eine zweite Anzahl (32) der Radsätze (24-36) mittels wenigstens einer Reibungskupplung (70) zur Einrichtung jeweiliger zweiter Kraftübertragungszweige geeignet ist, und wobei im Verlauf von Gangwechseln, bei denen wenigstens eine Schaltkupplung (60,62) zum Trennen bzw. Einrichten eines ersten Kraftübertragungszweiges betätigt wird, die Reibungskupplung (70) zusätzlich betätigbar ist, um einen Schaltruck zu vermindern, **dadurch gekennzeichnet, daß** die Reibungskupplung (70) wenigstens einem der Vorwärtsgänge 3 bis N-1 zugeordnet ist.

2. Kraftfahrzeug-Antriebsstrang nach Anspruch 1, **dadurch gekennzeichnet, daß** eine einzige Reibungskupplung (70) vorgesehen ist, die einem einzigen Vorwärtsgang (5) der Vorwärtsgänge 3 bis N-1 zugeordnet ist.

3. Kraftfahrzeug-Antriebsstrang nach Anspruch 2, **dadurch gekennzeichnet, daß** die Reibungskupplung (70) dem vorwärtsgang N-1 (5) zugeordnet ist.

4. Kraftfahrzeug-Antriebsstrang nach Anspruch 2, **dadurch gekennzeichnet, daß** die Reibungskupplung (70) dem Vorwärtsgang N-2 zugeordnet ist.

5. Kraftfahrzeug-Antriebsstrang nach Anspruch 2, **dadurch gekennzeichnet, daß** die Reibungskupplung (70) dem Vorwärtsgang 3 zugeordnet ist.

6. Kraftfahrzeug-Antriebsstrang nach einem der Ansprüche 1 bis 5 , **dadurch gekennzeichnet, daß** die Länge (L) der Reibungskupplung (70) in Richtung der Erstreckung der Welle (20;18a) im wesentlichen der Länge einer Schaltkupplung mit Synchroneinheit entspricht.

7. Kraftfahrzeug-Antriebsstrang nach einem der Ansprüche 1 bis 6, **dadurch gekennzeichnet, daß** das Stufengetriebe (14) hohlwellenfrei ausgebildet ist.

8. Kraftfahrzeug-Antriebsstrang nach einem der Ansprüche 1 bis 7, **dadurch gekennzeichnet, daß** die Reibungskupplung (70) baulich getrennt von der Trennkupplung (12) angeordnet ist.

9. Verfahren zum Steuern eines Schaltvorganges (1-2, 2-3, 3-4) eines N-Gang-Stufengetriebes (14) eines automatisierten Kraftfahrzeug-Antriebsstranges (10), insbesondere gemäß einem der Ansprüche 1 bis 8, mit den Schritten, im Zugbetrieb unter Last

a) einen eingelegten Gang z.b. Gang 1, 2 oder 3, des Stufengetriebes (14) zu einem ersten Zeitpunkt auszulegen ($t_1$), um einen bisherigen ersten Kraftübertragungszweig aufzutrennen,

b) einen einzulegenden Gang z.B. Gang 2, 3 oder 4, des Stufengetriebes (14) zu einem zweiten Zeitpunkt einzulegen ($t_5$), um einen neuen ersten Kraftübertragungszweig einzurichten, und

c) im Verlauf von dem ersten bei zum zweiten Zeitpunkt ($t_1$ - $t_5$) der Schritte a) und b) Drehmoment (M) von einem Kraftfahrzeugmotor mittels wenigstens einer Reibungskupplung (70) über einen zweiten Kraftübertragungszweig auf eine Welle (20;22a) des Stufengetriebes (14) zu übertragen, wobei die Reibungskupplung (70) einem Gang mit einem niedrigeren Übersetzungsverhältnis zugeordnet ist als der aus- und der einzulegende Gang 1,2,3,4,

**dadurch gekennzeichnet, daß** die Reibungskupplung (70) wenigstens einem der Gänge 3 bis N-1 zugeordnet wird.

10. Verfahren nach Anspruch 9, **dadurch gekennzeichnet, daß** die Reibungskupplung (70) in einem Zeitraum ($t_1$ - $t_5$) im Verlauf der Schritte a) und b) wenigstens das volle Motordrehmoment ($M_M$) multipliziert mit dem Übersetzungsverhältnis des zugeordneten Ganges überträgt.

11. Verfahren nach Anspruch 9 oder 10, **dadurch gekennzeichnet, daß** die Reibungskupplung (70) in einem weiteren zeitraum ($t_3$ - $t_5$) im Verlauf der Schritte a) und b) zusätzlich durch Verzögerung der Antriebswelle (16,18) einen Teil der Energie, die aus dem Trägheitsmoment der mit der Antriebswelle (16,18) mitdrehenden Elemente resultiert, auf die Welle (20,22a) überträgt.

12. Verfahren nach Anspruch 10 oder 11, **dadurch gekennzeichnet, daß** das Motordrehmoment bei Schaltungen im Teillastbereich in dem weiteren Zeitraum ($t_3$ - $t_5$) erhöht wird.

## Claims

1. An automated drive train (10) for a motor vehicle, comprising a step transmission (14) and a separation clutch (12) that is coupled between an engine of the motor vehicle and the step transmission (14), wherein the step transmission (14) comprises a plurality of gear wheel sets (24-36) corresponding to N forward gears and at least one reverse gear, wherein first idler gear wheels (44) of a first number (24-30) of the gear wheel sets (24-36), via shift clutches (60, 62) and establishing respective first power transmission branches, are rotationally fixedly connectable with a shaft (20) supporting the first idler gear wheels (44), while a second number (32) of said gear wheel sets (24-36) is adapted for establishing respective second power transmission branches via at least one friction clutch (70), and wherein during the course of gear changes at which at least one shift clutch (60, 62) is actuated for separating and establishing a first power transmission branch, respectively, the friction clutch (70) is additionally actuateable in order to reduce a gear shift jolt, **characterized in that** the friction clutch (70) is associated to at least one of the forward gears 3 to N-1.

2. The drive train for a motor vehicle of claim 1, **characterized in that** a single friction clutch (70) is provided, which is associated to one single forward gear (5) of the forward gears 3 to N-1.

3. The drive train for a motor vehicle of claim 2, **characterized in that** the friction clutch (70) is associated to forward gear N-1 (5).

4. The drive train for a motor vehicle of claim 2, **characterized in that** the friction clutch (70) is associated to forward gear N-2.

5. The drive train for a motor vehicle of claim 2, **characterized in that** the friction clutch (70) is associated to forward gear 3.

6. The drive train for a motor vehicle of any of claims 1 to 5, **characterized in that** the length (L) of said friction clutch (70) in the direction of the extension of the shaft (20; 18a) corresponds essentially to the length of a shift clutch including a synchronizer unit.

7. The drive train for a motor vehicle of any of claims 1 to 6, **characterized in that** the step transmission (14) is formed without hollow shafts.

8. The drive train for a motor vehicle of any of claims 1 to 7, **characterized in that** the friction clutch (70) is provided as a separate unit from the separation clutch (12).

9. A method for controlling a gear shift process (1-2, 2-3, 3-4) of an N-gear step transmission (14) of an automated drive train (10) for a motor vehicle, particularly in accordance with any of claims 1 to 8, comprising, in a traction mode under load, the steps of:

   a) disengaging an engaged gear, e.g. gear 1, 2, or 3, of said step transmission (14) at a first point of time ($t_1$) in order to separate a first power transmission branch active so far,

   b) engaging a gear to be engaged, e.g. gear 2, 3, or 4, of the step transmission (14) at a second point of time ($t_5$) in order to establish a new first power transmission branch, and

   c) in the course of steps a) and b), from the first to the second point of time ($t_1 - t_5$), transmitting torque (M) from an engine of the motor vehicle via a second power transmission branch onto a shaft (20; 22a) of the step transmission (14), using at least one friction clutch (70), wherein the friction clutch (70) is associated to a gear with a lower gear ratio than the gears 1, 2, 3, 4 to be disengaged and to be engaged,

   **characterized in that** the friction clutch (70) is associated to at least one of the gears 3 to N-1.

10. The method of claim 9, **characterized in that** the friction clutch (70), in a period of time ($t_1 - t_5$) during steps a) and b), transmits at least the full engine torque ($M_M$) multiplied with the gear ratio of the associated gear.

11. The method of claim 9 or 10, **characterized in that** the friction clutch (70), in a further period of time ($t_3 - t_5$) during steps a) and b), by deceleration of the drive shaft (16, 18), transmits additionally a part of the energy onto the shaft (20, 22a) that results from the inertia moment of elements co-rotating with the drive shaft (16, 18).

12. The method of claim 10 or 11, **characterized in that**, at gear shifts in a partial load range, the engine torque is increased in the further period of time ($t_3 - t_5$).

**Revendications**

1. Transmission pour véhicule automobile (10) pouvant être automatisée, comprenant une boîte de vitesses (14) et un embrayage de désaccouplement (12), qui est monté entre un moteur du véhicule automobile et la boîte de vitesses (14), la boite de vitesses (14) comportant une pluralité de jeux de pignons (24-36) correspondant à N vitesses de marche avant et à au moins une vitesse de marche arrière (R), des premières roues folles (44) d'une première série (24-30) de jeux de pignons (24-36) pouvant être reliées, de manière solidaire en rotation, à un arbre (20) les supportant au moyen d'embrayages (60, 62) en établissant des premières branches respectives du mécanisme de transmission de force, tandis qu'une seconde série (32) de jeux de pignons (24-36) est appropriée pour l'établissement de secondes branches respectives du mécanisme de transmission de force, et au cours des changements de vitesses, pendant lesquels au moins un embrayage (60, 62) est actionné pour séparer ou établir une première branche du mécanisme de transmission, l'embrayage à friction (70) pouvant en outre être actionné pour réduire un à-coup de commutation,

**caractérisée en ce que**

l'embrayage à friction (70) est associé au moins à une des vitesses de marche avant 3 à N-1 .

2.  Transmission pour véhicule automobile selon la revendication 1, **caractérisée en ce qu'**un seul embrayage à friction (70) est prévu qui est associé à une seule vitesse de marche avant (5) parmi les vitesses de marche avant 3 à N-1.

3.  Transmission pour véhicule automobile selon la revendication 2, **caractérisée en ce que** l'embrayage à friction (70) est associé à la vitesse de marche avant N-1 (5).

4.  Transmission pour véhicule automobile selon la revendication 2, **caractérisée en ce que** l'embrayage à friction (70) est associé à la vitesse de marche avant N-2.

5.  Transmission pour véhicule automobile selon la revendication 2, **caractérisée en ce que** l'embrayage à friction (70) est associé à la vitesse de marche avant 3.

6.  Transmission pour véhicule automobile selon l'une des revendications 1 à 5, **caractérisée en ce que** la longueur (L) de l'embrayage à friction (70) correspond dans le sens de l'étendue de l'arbre (20 ; 18a) sensiblement à la longueur d'un embrayage avec unité de synchronisation.

7.  Transmission pour véhicule automobile selon l'une des revendications 1 à 6, **caractérisée en ce que** la boîte de vitesses (14) est formée sans arbre creux.

8.  Transmission pour véhicule automobile selon l'une des revendications 1 à 7, **caractérisée en ce que** l'embrayage à friction (70) est disposé, par construction, désolidarisé de l'embrayage de désaccouplement (12).

9.  Procédé permettant de commander une opération de couplage (1-2, 2-3, 3-4) d'une boîte de vitesses (14) à N vitesses d'une transmission automatique d'un véhicule automobile (10), notamment selon l'une des revendications 1 à 8, avec les étapes, dans un régime de traction en charge, consistant à :

    a) désaccoupler une vitesse passée, dans un premier temps (t,), par exemple, la 1ère, la 2ème ou la 3ème de la boîte de vitesses (14), afin de séparer une première branche du mécanisme de transmission de force jusqu'ici utilisée,
    b) passer une vitesse devant être passée, dans un deuxième temps ($t_2$), par exemple, la 2ème, la 3ème ou la 4ème de la boîte de vitesses (14), afin d'établir une nouvelle branche du mécanisme de transmission de force, et
    c) transmettre dans l'intervalle du premier temps au deuxième temps ($t_1$ - $t_2$) des étapes a) et b), un couple (M) d'un moteur de véhicule automobile au moyen d'au moins un embrayage à friction (70) par l'intermédiaire d'une seconde branche du mécanisme de transmission de force à un arbre (20 ; 22a) d'une boîte de vitesses (14), l'embrayage à friction (70) étant associé à un rapport de démultiplication inférieur à celui de la vitesse 1, 2, 3, 4 à désengager ou à engager,

    **caractérisé en ce que**

    l'embrayage à friction (70) est associé au moins à une des vitesses 3 à N-1.

10. Procédé selon la revendication 9, **caractérisé en ce que**, dans un intervalle de temps ($t_1$ - $t_3$) au cours des étapes a) et b), l'embrayage à friction (70) transmet au moins le couple entier ($M_M$) du moteur multiplié avec le rapport de démultiplication de la vitesse associée.

11. Procédé selon la revendication 9 ou 10, **caractérisé en ce que**, dans un autre intervalle de temps ($t_3$ - $t_5$) au cours des étapes a) et b), en outre, par un ralentissement de l'arbre de commande (16, 18), l'embrayage à friction (70) transmet à l'arbre (20, 22a) une partie de l'énergie qui résulte du moment d'inertie des éléments en rotation avec l'arbre de commande (16, 18).

12. Procédé selon la revendication 10 ou 11, **caractérisé en ce que** le couple du moteur augmente lors des changements de vitesses en régime réduit dans l'autre intervalle de temps ($t_3$ - $t_5$).

Fig. 1

Fig. 2

Fig. 3

EP 1 002 971 B1

Fig. 4

Fig. 5

14

Fig. 6